# EUROPÄISCHE PATENTANMELDUNG

(11) **EP 4 574 621 A1**
(43) Veröffentlichungstag der Anmeldung: **25.06.2025**
(21) Anmeldenummer: 23218652.8
(22) Anmeldetag: 20.12.2023
(51) Int. Cl.: B61L 15/00

(54) **VERFAHREN ZUM AUTOMATISCHEN STEUERN EINES SCHIENENFAHRZEUGS UND FAHRZEUGSTEUERUNGSEINRICHTUNG**

(71) Anmelder: Siemens Mobility GmbH, 81739 München (DE)
(72) Erfinder: Muxfeldt, Arne, 38110 Braunschweig (DE); Tietge, Matthias, 38106 Braunschweig (DE)
(74) Vertreter: Siemens Patent Attorneys

(57) **Zusammenfassung**

Die Erfindung betrifft ein Verfahren zum automatischen Steuern eines Schienenfahrzeugs (1), das sich auf einer Fahrstrecke (2) in einer Fahrtrichtung (3) bewegt und das zur Traktionsenergieversorgung mit einer entlang der Fahrstrecke (2) verlaufenden Fahrleitung (4) in Kontakt steht, wobei dem Schienenfahrzeug signalisiert wird, dass die Traktionsenergieversorgung über die Fahrleitung (4) zumindest zeitweise und/oder abschnittsweise ausgefallen ist. Um die Probleme bei einem Ausfall der Traktionsenergieversorgung zu beseitigen oder zu verringern, ist erfindungsgemäß vorgesehen, dass für das Schienenfahrzeug (1) eine aktuelle Traktionsenergiereserve bestimmt wird und mittels der berechneten Traktionsenergiereserve ein vorausliegender nächster Haltepunkt (12) des Schienenfahrzeugs (1) bestimmt wird, wobei die Bestimmung der Traktionsenergiereserve unter Berücksichtigung einer aktuellen Geschwindigkeit des Schienenfahrzeugs (1) und die Bestimmung des nächsten Haltepunkts (12) unter Berücksichtigung einer aktuellen Position des Schienenfahrzeugs (1) und einer Topologie der vorausliegenden Fahrstrecke (2) geschieht.

Die Erfindung betrifft auch eine Fahrzeugsteuerungseinrichtung (8) und ein Schienenfahrzeug (1).

## Beschreibung

### Technisches Gebiet

Die Erfindung betrifft ein Verfahren zum automatischen Steuern eines Schienenfahrzeugs, das sich auf einer Fahrstrecke in einer Fahrtrichtung bewegt und das zur Traktionsenergieversorgung mit einer entlang der Fahrstrecke verlaufenden Fahrleitung in Kontakt steht, wobei dem Schienenfahrzeug signalisiert wird, dass die Traktionsenergieversorgung über die Fahrleitung zumindest zeitweise und/oder abschnittsweise ausgefallen ist.

Weiterhin betrifft die Erfindung eine Fahrzeugsteuerungseinrichtung zum automatischen Steuern eines Schienenfahrzeugs, das sich auf einer Fahrstrecke in einer Fahrtrichtung bewegt und das zur Traktionsenergieversorgung mit einer entlang der Fahrstrecke verlaufenden Fahrleitung in Kontakt steht, wobei dem Schienenfahrzeug signalisiert wird, dass die Traktionsenergieversorgung über die Fahrleitung zumindest zeitweise und/oder abschnittsweise ausgefallen ist.

### Technischer Hintergrund

Im Betrieb von Schienenfahrzeugen, wie beispielsweise U-Bahnen, Straßenbahnen, Fern- oder Nahverkehrszügen, kann es zu einem ungeplanten Ausfall der Traktionsenergieversorgung kommen. Die Schienenfahrzeuge werden üblicherweise über eine entlang der Fahrstrecke verlaufende Fahrleitung, wie beispielsweise eine Oberleitung oder dritte Schiene, mit der nötigen Traktionsenergie versorgt. Wenn es hier zu einem Ausfall der Traktionsenergieversorgung kommt, wird das Schienenfahrzeug üblicherweise gestoppt, auch wenn es sich zwischen zwei Stationen befindet. Insbesondere bei automatisiert fahrenden Schienenfahrzeugen ohne Personal kann dies zu erheblichen Störungen im Betriebsablauf der eisenbahntechnischen Anlage führen, weil niemand vor Ort ist, um die Situation zu bewerten und schnell Abhilfe zu schaffen. Folglich muss der Betrieb der eisenbahntechnischen Anlage häufig unterbrochen werden, damit Personal bzw. ein Bergungsfahrzeug zum liegengebliebenen Fahrzeug geschickt werden kann.

### Zusammenfassung der Erfindung

Es ist daher Aufgabe der vorliegenden Erfindung, ein Verfahren und eine Einrichtung der eingangs genannten Art bereitzustellen, mit denen die oben genannte Problematik behoben oder zumindest verbessert werden kann.

Erfindungsgemäß wird die Aufgabe für das eingangs genannte Verfahren dadurch gelöst, dass für das Schienenfahrzeug eine aktuelle Traktionsenergiereserve bestimmt wird und mittels der berechneten Traktionsenergiereserve ein vorausliegender nächster Haltepunkt des Schienenfahrzeugs bestimmt wird, wobei die Bestimmung der Traktionsenergiereserve unter Berücksichtigung einer aktuellen Geschwindigkeit des Schienenfahrzeugs und die Bestimmung des nächsten Haltepunkts unter Berücksichtigung einer aktuellen Position des Schienenfahrzeugs und einer Topologie der vorausliegenden Fahrstrecke geschieht.

Für die eingangs genannte Fahrzeugsteuerungseinrichtung wird die Aufgabe erfindungsgemäß dadurch gelöst, dass die Fahrzeugsteuerungseinrichtung ausgebildet ist, für das Schienenfahrzeug eine aktuelle Traktionsenergiereserve zu bestimmen und mittels der berechneten Traktionsenergiereserve einen vorausliegenden nächsten Haltepunkt des Schienenfahrzeugs zu bestimmen, wobei die Bestimmung der Traktionsenergiereserve unter Berücksichtigung einer aktuellen Geschwindigkeit des Schienenfahrzeugs und die Bestimmung des nächsten Haltepunkts unter Berücksichtigung einer aktuellen Position des Schienenfahrzeugs und einer Topologie der vorausliegenden Fahrstrecke geschieht.

Die erfindungsgemäße Lösung hat den Vorteil, dass bei Ausfall der Traktionsenergieversorgung eine Weiterfahrt, möglicherweise ohne aktiven Antrieb, in vielen Fällen ermöglicht wird, wenn ein geeigneter Haltepunkt erreichbar ist.

Nachdem festgestellt wurde, dass die Traktionsenergieversorgung des Schienenfahrzeugs ausgefallen ist, wird zunächst die aktuelle Traktionsenergiereserve bestimmt. Das Signal bzw. die Information über den Ausfall der Traktionsenergieversorgung kann das Schienenfahrzeug beispielsweise von einer Leitstelle bekommen oder selbst ermitteln. Die aktuelle Traktionsenergiereserve wird bei Schienenfahrzeugen, insbesondere ohne Traktionsenergiespeicher, vor allem durch kinetische Energie und potentielle Energie, bestimmt. Daher wird erfindungsgemäß die aktuelle Geschwindigkeit des Schienenfahrzeugs berücksichtigt, um daraus beispielsweise die kinetische Energie ermitteln zu können. Aus der berechneten Traktionsenergieversorgung wird anschließend ein vorausliegender nächster Haltepunkt des Schienenfahrzeugs bestimmt, der mit der berechneten Traktionsenergiereserve realisierbar ist. Bei dieser Bestimmung des nächsten Haltepunkts wird sowohl die aktuelle Position des Schienenfahrzeugs berücksichtigt als auch die Topologie der vor dem Schienenfahrzeug liegenden Fahrtstrecke. Unter der Topologie wird im Eisenbahnwesen ein Verlauf der Fahrstrecke in einem dreidimensionalen Raum verstanden. Aus der Topologie und der aktuellen Position des Schienenfahrzeugs kann gegebenenfalls die momentane potentielle Energie des Schienenfahrzeugs bestimmt werden und auch eine zum Erreichen eines möglichen Haltepunkts nötige Energie. Die bestimmte potentielle Energie kann dann möglicherweise zur Traktionsenergiereserve beitragen.

Mit Hilfe der Erfindung kann ermittelt werden, ob ein geeigneter vorausliegender Haltepunkt mit der aktuellen Traktionsenergiereserve des Schienenfahrzeugs erreichbar ist. Wenn dies der Fall ist, kann das Schienenfahrzeug diesen im automatischen Fahrbetrieb anfahren. Das Schienenfahrzeug rollt bis zum Haltepunkt aus, zumindest wenn kein Traktionsenergiespeicher auf dem Fahrzeug vorhanden ist, wie in den meisten Fällen üblich. Der Fall, dass ein Traktionsenergiespeier vorhanden ist, wird im Folgenden noch genauer beschrieben. Selbstverständlich kann eine Vielzahl von geeigneten Haltepunkten geprüft werden. Es sind aber nur solche Haltepunkte erreichbar, die innerhalb einer Distanz liegen, die mit der Traktionsenergiereserve erreichbar ist.

Zusätzlich kann auch ein Fahrdienstleiter in der Leitstelle über die Aktivierung der erfindungsgemäßen Stromausfallfahrt informiert werden, um gegebenenfalls das Schienenfahrzeug zu überwachen.

Durch die erfindungsgemäße Lösung kann das Schienenfahrzeug beispielsweise eine vorausliegende nächste Station erreichen, so dass den Fahrgästen das Verlassen des Schienenfahrzeugs ermöglicht wird und das Schienenfahrzeug für Personal leicht zugänglich ist. Die Traktionsenergiereserve wird dabei möglichst sparsam eingesetzt, um den Zug möglichst weit rollen zu lassen. Durch die Erfindung treten weniger durch einen Ausfall der Traktionsenergieversorgung bedingte Störungen im Betriebsablauf der eisenbahntechnischen Anlage auf, weil die Schienenfahrzeuge in vielen Fällen an einem unproblematischen Haltepunkt abgestellt werden können. So können stärkere Beeinträchtigungen der eisenbahntechnischen Anlage vermieden werden.

Die Erfindung betrifft das oben genannte Verfahren sowie die oben genannte Fahrzeugsteuerungseinrichtung, durch die für das Schienenfahrzeug eine Art Notlauffunktion ermöglicht wird. Hierbei können beispielsweise im Nahverkehrsbereich auch die Vorteile einer CBTC (Communication Based Train Control) Infrastruktur genutzt werden. Mittels der Erfindung können über automatisierte Entscheidungs- und Steuerungsfunktionen die Anzahl liegen gebliebener Fahrzeuge und Evakuierungen im Fall eines Ausfalls der Traktionsenergieversorgung reduziert werden. Durch die CBTC Infrastruktur kann beispielsweise ein Fahrdienstleiter Informationen zu verschiedenen Fahrzeugen erhalten, beispielsweise wie weit sie kommen und ob geeignete Haltepunkte erreicht werden können. Der Fahrdienstleiter kann sich mit Hilfe der Erfindung auf Fahrzeuge konzentrieren, die keinen geeigneten Haltepunkt erreichen können. Um die übrigen Fahrzeuge muss er sich nicht weiter kümmern. Dadurch kommt es zu einer Entlastung.

Für den Fall, dass die Traktionsenergieversorgung nicht an der aktuellen Position des Schienenfahrzeugs ausfällt, sondern in einem vorausliegenden Abschnitt, können vor Erreichen dieses Abschnitts auch Maßnahmen ergriffen werden, um die Traktionsenergiereserve zu erhöhen. Beispielsweise kann hierfür die Geschwindigkeit des Schienenfahrzeugs vor Erreichen des Abschnitts ohne Traktionsenergieversorgung noch einmal erhöht werden, wenn die maximal mögliche Geschwindigkeit noch nicht erreicht ist. Diese Ausgestaltung der Erfindung kann zusätzlich auch positiv durch die CBTC Infrastruktur beeinflusst werden, durch die beispielsweise eine Kommunikationsverbindung zum Schienenfahrzeug besteht.

Der Ausfall der Traktionsenergieversorgung bedeutet im Zusammenhang mit der Erfindung nicht, dass zeitweise keine Fahrleitung vorhanden ist, sondern dass die Energieversorgung über die Fahrleitung ausgefallen ist.

### Ausgestaltungen der Erfindung

Die erfindungsgemäße Lösung kann durch vorteilhafte Ausgestaltungen weiterentwickelt werden, die im Folgenden beschrieben sind.

So kann die Bestimmung des nächsten Haltepunkts unter Berücksichtigung eines Streckenatlasses geschehen, der Informationen zu der vorausliegenden Fahrstrecke umfasst. Dies hat den Vorteil, dass mittels des Streckenatlasses geeignete Haltepunkte leicht ermittelt werden können. Insbesondere kann der Streckenatlas Informationen zu möglichen Haltepunkten, die für einen Personenausstieg zugelassen sind, wie beispielsweise Rettungswege, Notausgänge oder Stationen, aufweisen. Dies ist von Vorteil, da ein sicherer Personenausstieg bei einem ausgewählten Haltepunkt wünschenswert ist.

Um in noch mehr Situationen auch entferntere Haltepunkte anfahren zu können, kann das Schienenfahrzeug wenigstens einen Traktionsenergiespeicher aufweisen und die Bestimmung der Traktionsenergiereserve unter Berücksichtigung eines Füllstands des Traktionsenergiespeichers geschehen. Der Traktionsenergiespeicher kann beispielsweise eine Batterie zur Speicherung von elektrischer Energie sein. Alternativ wären aber auch ein Druckluftspeicher oder Gasspeicher denkbar.

Um das Erreichen eines nächsten Haltepunkts bzw. die mit der Traktionsenergiereserve mögliche Distanz noch realistischer vorausberechnen zu können, kann bei der Bestimmung des nächsten Haltepunkts ein Fahrtwiderstand und/oder eine Masse des Schienenfahrzeugs berücksichtigt werden.

In einer vorteilhaften Ausgestaltung kann bei der Bestimmung des nächsten Haltepunkts eine Länge der ausgefallenen Fahrstromversorgung berücksichtigt werden. Dies hat den Vorteil, dass so auch solche Haltepunkte erreicht werden können, die wieder in einem Abschnitt mit funktionstüchtiger Traktionsenergieversorgung liegen.

In einer vorteilhaften Ausgestaltung der erfindungsgemäßen Fahrzeugsteuerungseinrichtung kann diese wenigstens eine Schnittstelle, insbesondere zu einer Leitstelle und/oder SCADA, umfassen, mittels der das Signal empfangbar ist, dass die Traktionsenergieversorgung über die Fahrleitung zumindest zeitweise und/oder abschnittsweise ausgefallen ist. Dies hat den Vorteil, dass das Signal über die ausgefallene Traktionsenergieversorgung besonders einfach übermittelt werden kann. Die Schnittstelle kann beispielsweise eine funkbasierte Kommunikationsschnittstelle sein, die eine Datenübermittlung z.B. per WLAN oder Mobilfunk ermöglicht.

Die Erfindung betrifft auch ein Schienenfahrzeug mit einer Fahrzeugsteuerungseinrichtung zum automatischen Steuern des Schienenfahrzeugs, wobei das Schienenfahrzeug zum Bewegen auf einer Fahrstrecke in einer Fahrtrichtung und zur Traktionsenergieversorgung zum Kontakt mit einer entlang der Fahrstrecke verlaufende Fahrleitung ausgebildet ist. Erfindungsgemäß ist vorgesehen, dass die Fahrzeugsteuerungseinrichtung gemäß einer der oben genannten erfindungsgemäßen Ausführungsformen ausgebildet ist.

In einer vorteilhaften Ausgestaltung des erfindungsgemäßen Schienenfahrzeugs kann dieses wenigstens einen Traktionsenergiespeicher aufweisen und die Fahrzeugsteuerungseinrichtung ausgebildet sein, bei der Bestimmung der Traktionsenergiereserve einen Füllstand des Traktionsenergiespeichers zu berücksichtigen. Dies hat den Vorteil, dass mit einem Traktionsenergiespeicher auch noch etwas weiter entfernte Haltepunkte erreichbar sind. So ist durch eine vergrößerte Distanz im Notlaufbetrieb mehr Flexibilität im Betrieb des Schienenfahrzeugs bei einem Ausfall der Traktionsenergieversorgung möglich.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Die Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird.

### Exemplarische Ausführungsbeispiele der Zeichnung

Im Folgenden wird die Erfindung mit Bezug auf die beigefügten Zeichnungen erläutert. Es zeigen:
- Fig. 1: eine schematische Darstellung einer eisenbahntechnischen Anlage mit einer beispielhaften Ausführungsform des erfindungsgemäßen Schienenfahrzeugs;
- Fig. 2: eine schematische Darstellung einer eisenbahntechnischen Anlage mit einer alternativen Ausführungsform des erfindungsgemäßen Schienenfahrzeugs;
- Fig. 3: eine schematische Darstellung einer eisenbahntechnischen Anlage mit einer weiteren alternativen Ausführungsform des erfindungsgemäßen Schienenfahr-zeugs.

### Detaillierte Beschreibung der Ausführungsbeispiele

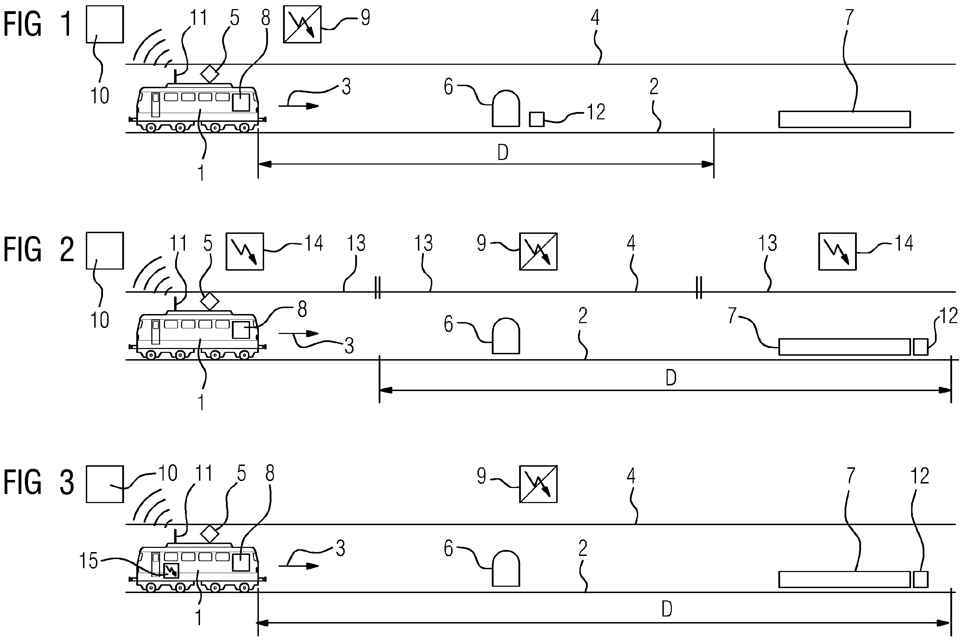

Zunächst wird die Erfindung mit Bezug auf die beispielhafte Ausführungsform in Fig. 1 beschrieben.

Figur 1 zeigt ein Schienenfahrzeug 1, das sich auf einer Fahrstrecke 2 in einer Fahrtrichtung 3 bewegt. Entlang der Fahrstrecke 2 verläuft eine Fahrleitung 4, mit der das Schienenfahrzeug 1 zur Traktionsenergieversorgung in bekannter Weise in Kontakt steht.

Bei der beispielhaften Ausführungsform in Fig. 1 ist die Fahrleitung 4 als eine Oberleitung ausgebildet, mit der das Schienenfahrzeug 1 über einen Pantographen 5 in Kontakt steht. Das Schienenfahrzeug 1 kann hierbei beispielsweise eine Straßenbahn, eine S-Bahn oder ein Regionalzug sein. Alternativ könnte das Schienenfahrzeug 1 auch eine U-Bahn und die Fahrleitung 4 eine dritte Schiene sein, wie aus dem Stand der Technik bekannt.

Auf der Fahrstrecke 2 befinden sich in der Fahrtrichtung 3 gesehen vor dem Schienenfahrzeug 1 beispielsweise ein Notausgang 6 und eine Station 7. Bei dem Schienenfahrzeug 1 handelt es sich um ein autonom fahrendes Schienenfahrzeug, das eine entsprechende Fahrzeugsteuerungseinrichtung 8 aufweist, die zum automatischen Steuern des Schienenfahrzeugs 1 ausgebildet ist. Die Fahrzeugsteuerungseinrichtung 8 kann auch als ATO (Automatic Train Operation)-Einrichtung bezeichnet werden.

In der in Fig. 1 dargestellten Situation ist die Traktionsenergieversorgung im Streckenabschnitt des Schienenfahrzeugs 1 ausgefallen, was über das Stromausfallsymbol 9 dargestellt ist. Der Ausfall kann beispielsweise durch ein ausgefallenes Unterwerk (nicht dargestellt) begründet sein. In dieser Situation kommen die erfindungsgemäße Fahrzeugsteuerungseinrichtung 8 und das erfindungsgemäße Verfahren zum Einsatz.

Über eine Leitstelle 10 empfängt das Schienenfahrzeug 1 mittels einer Kommunikationsschnittstelle 11 ein Signal, dass die Traktionsenergieversorgung über die Fahrleitung 4 im aktuellen Abschnitt des Schienenfahrzeugs 1 ausgefallen ist. Alternativ könnte das Schienenfahrzeug 1 das Signal auch selbst ermitteln. Das Fahrzeug kann beispielsweise die Spannung am Pantographen überwachen und so den Wegfall der externen Traktionsenergieversorgung selbst erkennen.

Anschließend bestimmt die erfindungsgemäße Fahrzeugsteuerungseinrichtung 8 eine aktuelle Traktionsenergiereserve für das Schienenfahrzeug 1. Die Traktionsenergiereserve wird bei dem Schienenfahrzeug 1 in Fig. 1 in der dargestellten Situation vor allem durch die kinetische Energie der aktuellen Geschwindigkeit des Schienenfahrzeugs 1 bestimmt. Die aktuelle Geschwindigkeit des Schienenfahrzeugs 1 ist der Fahrzeugsteuerungseinrichtung 8 bekannt, beispielsweise durch eine nicht weiter dargestellte Odometrieeinrichtung oder ähnliches. Zusätzlich könnte auch eine potentielle Energie zur Traktionsenergiereserve beitragen, wenn die Topologie der vor dem Schienenfahrzeug 1 liegenden Fahrstrecke 2 dies ermöglicht. Bei der in Fig. 1 dargestellten Situation ist die Fahrstrecke 2 flach, so dass hier keine potentielle Energie zu berücksichtigen ist. Wenn alternativ die Fahrstrecke 2 in der Fahrtrichtung 3 bergab führen würde, wäre dies möglicherweise anders.

Anhand der berechneten Traktionsenergiereserve bestimmt die Fahrzeugsteuerungseinrichtung 8 anschließend eine für das Schienenfahrzeug 1 maximal zurücklegbare Distanz D in der Fahrtrichtung 3. Anhand der Distanz D kann anschließend ein vorausliegender nächster Haltepunkt 12 bestimmt werden. Der Haltepunkt 12 muss logischerweise innerhalb der Distanz D liegen, da mögliche Haltepunkte außerhalb der Distanz D mit der berechneten Traktionsenergiereserve nicht erreicht werden könnten. Beim Bestimmen der Distanz D und des Haltepunkts 12 wird die die aktuelle Position des Schienenfahrzeugs 1 und auch die Topologie der vor dem Schienenfahrzeug 1 liegenden Fahrstrecke 2 berücksichtigt. Weiterhin wird bei der beispielhaften Ausführungsform in Fig. 1 auch ein der Fahrzeugsteuerungseinrichtung 8 zur Verfügung stehender Streckenatlas berücksichtigt. Der Streckenatlas umfasst verschiedene Informationen über die vorausliegende Fahrstrecke 2, wie beispielsweise den Notausgang 6 und die Station 7, die einen Ausstieg von Personen ermöglichen. Weiterhin werden auch der Fahrtwiderstand und die Masse des Schienenfahrzeugs 1 beim Bestimmen der Distanz D berücksichtigt. Da nicht jeder beliebige Haltepunkt bei einem Ausfall der Traktionsenergieversorgung für das Schienenfahrzeug 1 geeignet ist, ist die Berücksichtigung des Streckenatlasses besonders vorteilhaft.

Bei der beispielhaften Ausführungsform in Fig. 1 wäre eine Weiterfahrt auch über den Haltepunkt 12 hinaus möglich, bis das Ende der Distanz D erreicht wäre. Allerdings wäre am Ende der Distanz D kein Ausstieg der Fahrgäste möglich, weil diese Position dies beispielsweise aus Sicherheitsgründen nicht zulässt. Der in Fig. 1 dargestellte Abschnitt der Fahrstrecke 2 befindet sich beispielsweise in einem Tunnel. Daher wird von der erfindungsgemäßen Fahrzeugsteuerungseinrichtung 8 der Haltepunkt 12 ausgewählt, da er sich an dem Notausgang 6 befindet und ein Ausstieg der Fahrgäste dort möglich ist. Noch besser wäre selbstverständlich ein Haltepunkt, mit dem die Station 7 für das Schienenfahrzeug 1 erreicht würde. Da die Station 7 aber nicht innerhalb der Distanz D liegt, ist dies nicht realisierbar und wird von der erfindungsgemäßen Fahrzeugsteuerungseinrichtung 8 nicht ausgewählt.

Im Folgenden wird die Erfindung auch mit Bezug auf die beispielhafte Ausführungsform der Fig. 2 beschrieben. Der Einfachheit halber wird lediglich auf die Unterschiede zur Ausführungsform in Fig. 1 eingegangen. Gleiche Bezugszeichen bezeichnen gleiche Teile.

Bei der beispielhaften Ausführungsform in Fig. 2 sind im Gegensatz zur Fig. 1 im dargestellten Bereich mehrere Fahrleitungsabschnitte 13 entlang der Fahrstrecke 2 vorhanden. Die Fahrleitungsabschnitte 13 können beispielsweise jeweils von unterschiedlichen Unterwerken (nicht dargestellt) mit Traktionsenergie versorgt werden. So kann es vorkommen, dass lediglich in einem Fahrleitungsabschnitt 13 die Traktionsenergieversorgung ausgefallen ist und die übrigen Fahrleitungsabschnitte 13 davon nicht betroffen sind. Dies ist bei der in Fig. 2 dargestellten Ausführungsform der Fall. Nur der mittlere Fahrleitungsabschnitt 13 hat aktuell keine Traktionsenergieversorgung, was durch das Stromausfallsymbol 9 in Fig. 2 dargestellt ist. Die Fahrleitungsabschnitte 13 davor und dahinter sind weiterhin mit Traktionsenergie versorgt, was durch die Symbole 14 symbolisiert ist.

Wie bei der Ausführungsform in Fig. 1 bekommt das Schienenfahrzeug 1 bei der Ausführungsform in Fig. 2 von der Leitstelle 10 das Signal, dass die Traktionsenergieversorgung ausgefallen ist, allerdings mit dem Zusatz, dass dies nur für den mittleren Fahrleitungsabschnitt 13 gilt. In der in Fig. 2 dargestellten Position 1 hat das Schienenfahrzeug 1 also weiterhin Traktionsenergieversorgung, weil es noch nicht im mittleren Fahrleitungsabschnitt 13 ist. Trotzdem wird bereits zum dargestellten Zeitpunkt durch die erfindungsgemäße Fahrzeugsteuerungseinrichtung 8 geplant, wo der nächste Haltepunkt 12 ist. Dabei wird erfindungsgemäß aber schon der Fahrleitungsabschnitt 13 ohne Traktionsenergieversorgung berücksichtigt. Da der Ausfall der Traktionsenergieversorgung erst ab dem kommenden Fahrleitungsabschnitt 13 zum Tragen kommt, wird die Distanz D auch erst ab dem Anfang dieses Fahrleitungsabschnitts 13 berechnet. Zusätzlich kann bei der Ausführungsform in Fig. 2 berücksichtigt werden, dass das Schienenfahrzeug 1 zum aktuellen Zeitpunkt noch Traktionsenergieversorgung hat und somit beispielsweise die Geschwindigkeit erhöhen kann. Dadurch wird die kinetische Energie am Anfang des mittleren Fahrleitungsabschnitts 13 erhöht, so dass die Traktionsenergiereserve einen höheren Füllstand hat als bei der Ausführungsform in Fig. 1 und auch die ermittelte Distanz D größer ist. Daher ist bei der Ausführungsform in Fig. 2 möglich, dass der erfindungsgemäß ermittelte Haltepunkt 12 an der Station 7 liegt. So kann die Station 7 vom Schienenfahrzeug 1 erreicht werden, was die oben genannten Vorteile hat. Die erfindungsgemäße Fahrzeugsteuerungseinrichtung 8 hat bei der Ausführungsform in Fig. 2 somit berechnet, dass der mittlere Fahrleitungsabschnitt 13 ohne Traktionsenergieversorgung trotzdem mit der vorhandenen Traktionsenergiereserve durchfahren werden kann.

Im Folgenden wird die beispielhafte Ausführungsform in Fig. 3 beschrieben. Der Einfachheit halber wird lediglich auf die Unterschiede zu der Ausführungsform in Fig. 1 eingegangen. Gleiche Bezugszeichen bezeichnen gleiche Teile.

Anders als bei der Ausführungsform in Fig. 1 umfasst das Schienenfahrzeug bei der Ausführungsform in Fig. 3 einen Traktionsenergiespeicher 15. Der Traktionsenergiespeicher 15 ist bei der beispielhaften Ausführungsform in Fig. 3 ein Batteriespeicher, durch den das Schienenfahrzeug 1 auch beim Ausfall der externen Traktionsenergieversorgung über die Fahrleitung 4 noch für eine gewisse Zeit mit Traktionsenergie versorgt werden kann. Dies wird bei der erfindungsgemäßen Bestimmung der Traktionsenergiereserve berücksichtigt, so dass die ermittelte Distanz D bei der Ausführungsform in Fig. 3 größer ist als bei der Ausführungsform in Fig. 1. So ist es für das erfindungsgemäße Schienenfahrzeug 1 in Fig. 3 möglich, die Station 7 zu erreichen und der ermittelte Haltepunkt 12 ist im Bereich der Station 7 angeordnet.

## Patentansprüche

1. Verfahren zum automatischen Steuern eines Schienenfahrzeugs (1), das sich auf einer Fahrstrecke (2) in einer Fahrtrichtung (3) bewegt und das zur Traktionsenergieversorgung mit einer entlang der Fahrstrecke (2) verlaufenden Fahrleitung (4) in Kontakt steht,
wobei dem Schienenfahrzeug signalisiert wird, dass die Traktionsenergieversorgung über die Fahrleitung (4) zumindest zeitweise und/oder abschnittsweise ausgefallen ist, **dadurch gekennzeichnet, dass**
für das Schienenfahrzeug (1) eine aktuelle Traktionsenergiereserve bestimmt wird und mittels der berechneten Traktionsenergiereserve ein vorausliegender nächster Haltepunkt (12) des Schienenfahrzeugs (1) bestimmt wird,
wobei die Bestimmung der Traktionsenergiereserve unter Berücksichtigung einer aktuellen Geschwindigkeit des Schienenfahrzeugs (1) und die Bestimmung des nächsten Haltepunkts (12) unter Berücksichtigung einer aktuellen Position des Schienenfahrzeugs (1) und einer Topologie der vorausliegenden Fahrstrecke (2) geschieht.

2. Verfahren nach Anspruch 1,
**dadurch gekennzeichnet, dass**
die Bestimmung des nächsten Haltepunkts (12) unter Berücksichtigung eines Streckenatlasses geschieht, der Informationen zu der vorausliegenden Fahrstrecke (2) umfasst.

3. Verfahren nach Anspruch 2,
**dadurch gekennzeichnet, dass**
der Streckenatlas Informationen zu möglichen Haltepunkten (12), die für einen Personenausstieg zugelassen sind, wie beispielsweise Rettungswege, Notausgänge (6) oder Stationen (7), aufweist.

4. Verfahren nach einem der oben genannten Ansprüche,
**dadurch gekennzeichnet, dass**
das Schienenfahrzeug (1) wenigstens einen Traktionsenergiespeicher (15) aufweist und die Bestimmung der Traktionsenergiereserve unter Berücksichtigung eines Füllstands des Traktionsenergiespeichers (15) geschieht.

5. Verfahren nach einem der oben genannten Ansprüche,
**dadurch gekennzeichnet, dass**
bei der Bestimmung des nächsten Haltepunkts (12) ein Fahrtwiderstand und/oder eine Masse des Schienenfahrzeugs (1) berücksichtigt werden.

6. Verfahren nach einem der oben genannten Ansprüche,
**dadurch gekennzeichnet, dass**
bei der Bestimmung des nächsten Haltepunkts (12) eine Länge der ausgefallenen Fahrstromversorgung berücksichtigt wird.

7. Fahrzeugsteuerungseinrichtung (8) zum automatischen Steuern eines Schienenfahrzeugs (1), das sich auf einer Fahrstrecke (2) in einer Fahrtrichtung (3) bewegt und das zur Traktionsenergieversorgung mit einer entlang der Fahrstrecke (2) verlaufenden Fahrleitung (4) in Kontakt steht,
wobei dem Schienenfahrzeug (1) signalisiert wird, dass die Traktionsenergieversorgung über die Fahrleitung (4) zumindest zeitweise und/oder abschnittsweise ausgefallen ist,
**dadurch gekennzeichnet, dass**
die Fahrzeugsteuerungseinrichtung (8) ausgebildet ist, für das Schienenfahrzeug (1) eine aktuelle Traktionsenergiereserve zu bestimmen und mittels der berechneten Traktionsenergiereserve einen vorausliegenden nächsten Haltepunkt (12) des Schienenfahrzeugs (1) zu bestimmen,
wobei die Bestimmung der Traktionsenergiereserve unter Berücksichtigung einer aktuellen Geschwindigkeit des Schienenfahrzeugs (1) und die Bestimmung des nächsten Haltepunkts (12) unter Berücksichtigung einer aktuellen Position des Schienenfahrzeugs (1) und einer Topologie der vorausliegenden Fahrstrecke (2) geschieht.

8. Fahrzeugsteuerungseinrichtung (8) nach Anspruch 7,
**dadurch gekennzeichnet, dass**
die Fahrzeugsteuerungseinrichtung (8) wenigstens eine Schnittstelle, insbesondere zu einer Leitstelle (10) und/oder SCADA, umfasst, mittels der das Signal empfangbar ist, dass die Traktionsenergieversorgung über die Fahrleitung (4) zumindest zeitweise und/oder abschnittsweise ausgefallen ist.

9. Schienenfahrzeug (1) mit einer Fahrzeugsteuerungseinrichtung (8) zum automatischen Steuern des Schienenfahrzeugs (1), wobei das Schienenfahrzeug (1) zum Bewegen auf einer Fahrstrecke (2) in einer Fahrtrichtung (3) und zur Traktionsenergieversorgung zum Kontakt mit einer entlang der Fahrstrecke (2) verlaufenden Fahrleitung (3) ausgebildet ist,
**dadurch gekennzeichnet, dass**
die Fahrzeugsteuerungseinrichtung (8) nach Anspruch 7 oder 8 ausgebildet ist.

10. Schienenfahrzeug (1) nach Anspruch 9,
**dadurch gekennzeichnet, dass**
das Schienenfahrzeug (1) wenigstens einen Traktionsenergiespeicher (15) aufweist und die Fahrzeugsteuerungseinrichtung (8) ausgebildet ist, bei der Bestimmung der Traktionsenergiereserve einen Füllstand des Traktionsenergiespeichers (15) zu berücksichtigen.

11. Computerprogrammprodukt mit Programmbefehlen zur Durchführung des Verfahrens gemäß einem der Ansprüche 1 bis 6.

12. Bereitstellungsvorrichtung für das Computerprogrammprodukt nach Anspruch 11, wobei die Bereitstellungsvorrichtung das Computerprogrammprodukt speichert und/oder bereitstellt.
